Europäisches Patentamt

European Patent Office

Office européen des brevets

(19)

(11)    EP 0 665 505 B1

(12)    FASCICULE DE BREVET EUROPEEN

(45)  Date de publication et mention
      de la délivrance du brevet:
      **14.11.2001   Bulletin 2001/46**

(51)  Int Cl.⁷: $G06F\ 17/40$, $G01D\ 1/02$

(21)  Numéro de dépôt: **95400028.7**

(22)  Date de dépôt: **06.01.1995**

(54)  **Procédé et dispositif de détermination d'un paramètre physique**

      Verfahren und Vorrichtung zur Erfassung eines physikalischen Parameters

      Process and device for determining a physical parameter

(84)  Etats contractants désignés:
      **AT BE CH DE DK ES FR GB IE IT LI NL SE**

(30)  Priorité:  **01.02.1994   FR 9401086**

(43)  Date de publication de la demande:
      **02.08.1995   Bulletin 1995/31**

(73)  Titulaire: **SCHLUMBERGER INDUSTRIES
      92120 Montrouge (FR)**

(72)  Inventeurs:
      • **Beneteau, Lionel
        F-92120 Montrouge (FR)**
      • **Boubal, Olivier
        F-69130 Ecully (FR)**
      • **Oksman, Jacques
        F-92160 Antony (FR)**

(56)  Documents cités:
      **EP-A- 0 019 672          EP-A- 0 201 296
      GB-A- 2 068 532**

## Description

La présente invention est relative à un procédé de détermination d'un paramètre physique représenté par l'évolution au cours du temps d'une grandeur physique G pouvant varier entre une valeur minimale $G_{min}$ et une valeur maximale $G_{max}$.

Dans de nombreuses industries et notamment dans le domaine du comptage volumétrique de fluide, il existe un besoin de déterminer un paramètre physique représenté par l'évolution au cours du temps d'une grandeur physique G, ledit paramètre physique représentant par exemple l'intégrale d'une grandeur physique telle que le débit d'un fluide et correspondant alors au volume du fluide.

Certains systèmes de mesure reposent sur le principe selon lequel on a accès directement à l'intégrale de la grandeur physique et non pas à la valeur instantanée de ladite grandeur physique.

Cependant, ces systèmes sont de plus en plus fréquemment modifiés dans le but d'intégrer de nouvelles fonctions qui nécessitent la connaissance de la valeur instantanée de la grandeur physique et, pour ce faire, on leur adjoint des moyens électroniques adaptés, notamment pour convertir les signaux analogiques en signaux numériques et effectuer des traitements de ces signaux numériques.

Ainsi dans les systèmes de mesure modifiés, le paramètre physique représentant l'intégrale V d'une grandeur physique G n'est plus directement obtenu mais est déterminé par un procédé du type suivant: à l'instant t, la grandeur physique G représentative d'un certain état est relevée et traitée par une chaîne d'acquisition et de traitement de données pouvant par exemple comprendre un ou plusieurs capteurs ainsi que des moyens de traitement du signal délivré par le ou les capteurs (amplificateur, convertisseur analogique numérique, ...) ce qui fournit une valeur estimée Gm(t) encore appelée estimateur de la grandeur physique G à l'instant t. Un traitement numérique permet de déterminer alors le paramètre physique, c'est-à-dire l'intégrale Vm par rapport au temps de l'estimateur Gm à l'instant t, Vm(t) = Vm(t-1) + Gm(t) Δt où Vm(t-1) représente l'intégrale par rapport au temps de l'estimateur Gm à l'instant t-1, et Δt représente l'intervalle de temps fixé entre deux instants successifs au cours desquels a été déterminée l'intégrale Vm de l'estimateur Gm. Après calcul et stockage de l'intégrale Vm, le système de mesure attend une durée Δt avant d'estimer la nouvelle valeur de la grandeur physique G.

Les étapes mentionnées ci-dessus sont ensuite répétées au cours du temps.

Or, la Demanderesse a constaté que les variations temporelles de la grandeur physique G étaient séparées de périodes durant lesquelles la grandeur G ne variait que peu ou pas du tout.

Les considérations précédentes conduisent à adapter la durée séparant deux instants de mesure de la grandeur physique G aux variations temporelles de ladite grandeur physique G, selon le principe suivant :

- espacer les instants de mesure lorsque la grandeur physique G varie peu ou pas du tout,
- rapprocher les instants de mesure lorsque la grandeur physique G varie de manière plus importante.

D'après le brevet EP 0019672, on connaît une méthode d'échantillonnage de différentes grandeurs physiques (température, pression, débit ... ) lors de la prise d'échantillons par un outil autonome descendu au fond d'un puits de pétrole. Cette méthode prévoit de prendre des mesures des grandeurs physiques concernées suivant des intervalles de temps d'échantillonnage variables afin de suivre au mieux les variations desdites grandeurs physiques, de traiter les données mesurées et ainsi d'utiliser d'une manière plus efficace une mémoire de stockage des données qui possède une capacité de stockage limitée.

Le document EP 0 201 296 décrit une méthode qui consiste à pré-calculer une estimation de la valeur "ultérieure" d'une grandeur physique en fonction de trois premières valeurs mesurées suivant une même fréquence d'échantillonnage. La fréquence d'échantillonnage est ensuite modifiée après mesure de la valeur "ultérieure" réelle de cette grandeur physique et après comparaison avec un seuil prédéterminé - la fréquence étant augmentée si la valeur réelle est supérieure au seuil et est réduite dans l'autre cas. Une telle méthode ne permet pas de garantir que l'erreur commise lors de la détermination de la valeur du paramètre physique représentant l'évolution au cours du temps de la grandeur physique est bornée et ne dépasse pas un seuil d'erreur prédéterminé.

Cependant, lors de la détermination en temps discret du paramètre physique représentant l'intégrale de la grandeur physique G, la valeur instantanée mesurée ou l'estimateur Gm de cette grandeur physique est obtenue avec une certaine erreur qui dépend du principe même de la mesure ou de l'estimation.

En outre, la détermination du paramètre physique représentant l'intégrale

Vm par rapport au temps de la grandeur physique mesurée Gm est également entachée d'une erreur étant donné qu'il n'est pas possible de connaître avec exactitude les variations de la grandeur physique entre deux instants de mesure.

La Demanderesse s'est aperçue que dans de nombreux domaines techniques, comme celui du comptage, où des mesures précises sont exigées et où les instants de mesure doivent être aussi espacés que possible, par exemple pour des problèmes de capacité de stockage des données ou des problèmes de consommation d'énergie électrique des capteurs et des circuits électroniques associés alimentés par une ou plusieurs piles électriques de capacité limitée, il peut être essentiel d'approximer en temps discret de la manière la plus exacte possible une grandeur physique G pouvant varier continûment au cours du temps en s'assurant que l'on ne dépasse pas un certain seuil d'erreur prédéterminé dans l'évaluation de l'intégrale par rapport au temps de la mesure de ladite grandeur physique.

La présente invention propose donc un nouveau procédé de détermination d'un paramètre physique représenté par l'évolution au cours du temps d'une grandeur physique G pouvant varier entre une valeur minimale $G_{min}$ et une valeur maximale $G_{max}$, qui soit simple et efficace et permette de suivre les variations temporelles de ladite grandeur physique G en s'assurant que l'erreur commise lors de la détermination dudit paramètre physique soit inférieure à un seuil d'erreur prédéterminé, tout en espaçant autant que possible les instants de mesure.

La présente invention a ainsi pour objet un procédé de détermination d'un paramètre physique représenté par l'évolution au cours du temps d'une grandeur physique G pouvant varier entre une valeur minimale $G_{min}$ et une valeur maximale $G_{max}$, caractérisé en ce qu'il consiste à

- mesurer ladite grandeur physique à intervalles de temps variables appelés temps d'échantillonnage.
- à déterminer après chaque mesure de la grandeur physique la valeur correspondante du paramètre physique représentant l'intégrale par rapport au temps de la grandeur physique, ainsi que la variation de ladite grandeur physique par rapport à un seuil prédéterminé.
- à calculer l'erreur théorique maximale induite par la détermination du paramètre physique correspondant.
- à sommer les erreurs théoriques maximales induites pour les différentes mesures successives effectuées.
- à comparer cette somme avec le seuil d'erreur prédéterminé, et
- à ajuster le temps d'échantillonnage avant chaque nouvelle mesure de ladite grandeur physique en fonction du résultat de ladite comparaison, de façon à ne pas dépasser un seuil d'erreur prédéterminé lors de la détermination de la valeur du paramètre physique correspondant à ladite nouvelle mesure de la grandeur physique.

Un tel procédé est particulièrement avantageux. En effet, le procédé selon l'invention tient compte des erreurs théoriques maximales commises précédemment et d'un seuil d'erreur prédéterminé pour optimiser le temps d'échantillonnage en l'adaptant au plus près aux variations de la grandeur physique G tout en essayant d'espacer le plus possible les points de mesure de ladite grandeur physique G. Ainsi, le procédé permet d'optimiser, et généralement de réduire de façon significative la consommation énergétique du circuit de mesure (capteur(s) et électronique associés). Par exemple, lorsque le circuit de mesure est alimenté par une (ou plusieurs) pile(s) électrique(s), qui a une capacité électrique et donc une durée de vie limitée, le procédé selon l'invention permet d'optimiser la consommation électrique en fonction des contraintes fixées pour la mesure (seuil d'erreur à ne pas dépasser), cette optimisation conduisant généralement à une diminution de la consommation électrique et donc à une augmentation de l'autonomie de l'ensemble constitué par le (ou les) capteur(s), l'électronique associée et la (ou les) pile(s) électrique(s). Le procédé selon l'invention permet également de réduire le nombre de points de mesures et donc d'optimiser les capacités de stockage des mémoires qui sont limitées.

Selon d'autres caractéristiques de l'invention:

- on soustrait la somme des erreurs théoriques maximales du seuil d'erreur prédéterminé pour obtenir un crédit d'erreur,
- le temps d'échantillonnage est d'autant plus grand que le crédit d'erreur est élevé,
- le temps d'échantillonnage est déterminé en fonction du crédit d'erreur et de la plus grande variation possible de la grandeur physique qui est fonction des valeurs $G_{min}$, $G_{max}$ et de la dernière valeur mesurée de ladite grandeur physique,
- le temps d'échantillonnage est compris entre une valeur minimale $T_S$ et une valeur maximale prédéterminées.

Selon encore d'autres caractéristiques de l'invention:

- la somme des erreurs théoriques maximales est calculée pour une valeur du paramètre physique représenté par l'évolution au cours du temps de la grandeur physique G, au plus égale à une valeur prédéterminée dudit paramètre physique
- lorsque la valeur prédéterminée du paramètre physique est obtenue après une série de mesures successives de la grandeur physique G, alors on ne tient plus compte de la (ou des) première(s) valeur(s) respective(s) de l'erreur théorique maximale pour le calcul de la somme des erreurs théoriques maximales.

Avantageusement, dès que la valeur prédéterminée du paramètre physique est atteinte pour une série de mesures successives de la grandeur physique, alors on élimine la (ou les) première(s) valeurs(s) respective(s) de l'erreur théorique maximale, ce qui permet d'augmenter le crédit d'erreur et donc le temps d'échantillonnage suivant.

La présente invention a également pour objet un dispositif de détermination d'un paramètre physique représenté par l'évolution au cours du temps d'une grandeur physique pouvant varier entre une valeur minimale et une valeur maximale pour la mise en oeuvre du procédé, caractérisé en ce que ledit dispositif comprend

- des moyens de mesure de ladite grandeur physique suivant des intervalles de temps variables appelés temps d'échantillonnage,
- des moyens de détermination de la valeur correspondante du paramètre physique, représentant l'intégrale par rapport au temps de la grandeur physique, à partir de ladite mesure de la grandeur physique,
- des moyens (32) de détermination de la valeur correspondante du paramètre physique, représentant l'intégrale par rapport au temps de la grandeur physique, à partir de ladite mesure de la grandeur physique,
- des moyens (32) de comparaison de la variation de la grandeur physique entre deux mesures successives de celle-ci par rapport à un seuil prédéterminé ($G_S$),
- des moyens de détermination de l'erreur théorique maximale induite par la détermination dudit paramètre physique,
- des moyens de calcul de la somme des erreurs théoriques maximales induites pour les différentes mesures successives effectuées.
- des moyens de comparaison de ladite somme avec le seuil d'erreur prédéterminé ($E_{max}$), et
- des moyens de détermination du temps d'échantillonnage avant chaque nouvelle mesure de la grandeur physique,

ledit temps d'échantillonnage étant déterminé de façon à ne pas dépasser un seuil d'erreur prédéterminé $E_{max}$ lors de la détermination de la valeur du paramètre physique correspondant à ladite nouvelle mesure de la grandeur physique.

Selon d'autres caractéristiques du dispositif:

- le dispositif comprend des premiers moyens de mise en mémoire de mesures successives de la grandeur physique G, de temps d'échantillonnage et d'erreurs théoriques maximales correspondants.
- les premiers moyens de mise en mémoire comprennent un registre à décalage.
- le dispositif comprend des second moyens de mise en mémoire des valeurs successives du paramètre physique.
- le dispositif comprend des moyens de détermination de la valeur du paramètre physique correspondant aux mesures successives de la grandeur physique G, aux temps d'échantillonnage et aux erreurs théoriques maximales mémorisés, de comparaison de ladite valeur avec une valeur prédéterminée du paramètre physique, ainsi que des moyens pour éliminer des premiers moyens de mise en mémoire la (ou les) première(s) erreur(s) théorique(s) maximale(s) mémorisée(s) lorsque la valeur prédéterminée du paramètre physique est atteinte

Le procédé selon l'invention trouve une application particulièrement intéressante dans le domaine du comptage de fluide et notamment pour la détermination d'un volume de gaz traversant une conduite. A titre d'exemple, la mesure du débit de gaz peut être effectuée à l'aide de deux transducteurs à ultrasons alternativement émetteur et récepteur, éloignés et en regard l'un de l'autre dans la conduite.

L'étape de mesure du procédé est réalisée de la manière suivante:

- on émet un signal ultrasonore à partir d'un premier transducteur en direction du second transducteur,
- on reçoit ledit signal ultrasonore au bout d'un temps t dit de propagation,
- on amplifie et on convertit en numérique le signal reçu,
- on mesure ledit temps de propagation ou le déphasage des signaux ultrasonores émis et reçu,
- on répète les étapes précédentes en inversant le rôle d'émetteur et de récepteur des transducteurs,
- et on déduit le débit du gaz des mesures des différents temps de propagation.

Conformément à l'invention, le procédé peut s'appliquer dans de nombreux domaines techniques où l'on doit mesurer en temps discret une grandeur physique qui varie continûment au cours du temps (débit, température, pression, intensité électrique, ... ) et déterminer le paramètre physique représenté par l'évolution au cours du temps de cette grandeur physique, telle que par exemple l'intégrale de la mesure de la grandeur physique, de manière aussi fiable que possible tout en tenant compte des erreurs introduites lors de la détermination dudit paramètre physique pour ne pas dépasser un seuil d'erreur prédéfini. Dans les débitmètres dont le principe est basé sur la mesure du temps de propagation ou du déphasage d'une impulsion thermique émise par une source dans un fluide et reçue par un capteur, l'invention peut par exemple trouver une application fort intéressante.

En effet, la détermination du prochain instant d'émission des impulsions thermiques peut être déterminée en fonction du débit de fluide mesuré et de l'erreur fixée.

Il peut être avantageux d'utiliser l'invention dans un compteur de fluide de type oscillateur fluidique ou dans un compteur de fluide à tourbillons dans lequel, d'une part, un (ou plusieurs) capteur(s) détecte(nt) la pression différentielle (ou l'écoulement provoqué par la pression différentielle) due à l'oscillation du jet de fluide ou à la formation des tourbillons de fluide et, d'autre part, des moyens électroniques associés au(x) dit(s) capteur(s) déterminent à partir de cette pression le volume ayant traversé ledit compteur.

Le procédé selon l'invention permet ainsi de réduire la consommation énergétique du capteur en espaçant autant que possible les instants d'alimentation dudit capteur compte tenu notamment du crédit d'erreur dont on dispose.

L'invention peut également être appliquée dans le domaine de la circulation routière en évaluant le nombre de voitures sur une période déterminée, notamment en vue d'évaluer le trafic autoroutier à un péage. Pour ce faire, on ajuste le prochain instant de mesure du flot de véhicules en fonction de la variation possible du flot et de l'erreur que l'on s'est fixé.

D'autres caractéristiques et avantages apparaîtront au cours de la description qui va suivre, donnée uniquement à titre d'exemple non limitatif, et faite en référence aux dessins annexés sur lesquels:

- la figure 1 est une vue d'ensemble schématique d'un compteur de gaz et d'un bloc électronique associé permettant de mettre en oeuvre le procédé selon l'invention,
- la figure 2 représente de manière schématique un premier exemple de l'évolution du débit de gaz en fonction du temps,
- la figure 3 représente de manière schématique un deuxième exemple de l'évolution du débit de gaz en fonction du temps,
- la figure 4 est une vue schématique agrandie d'un microcontroleur faisant partie du bloc électronique de la figure 1,
- la figure 5 représente de manière schématique un troisième exemple de l'évolution du débit de gaz en fonction du temps.
- les figurés 6a et 6b sont des vues représentant les registres à décalage d'une mémoire vive MEM1 intégrée dans le microcontroleur de la figure 4 à deux instants différents du procédé selon l'invention,
- la figure 7 est un organigramme représentant les différentes étapes du procédé selon un mode de réalisation de l'invention,
- la figure 8 représente de manière schématique un quatrième exemple de l'évolution du débit de gaz en fonction du temps.

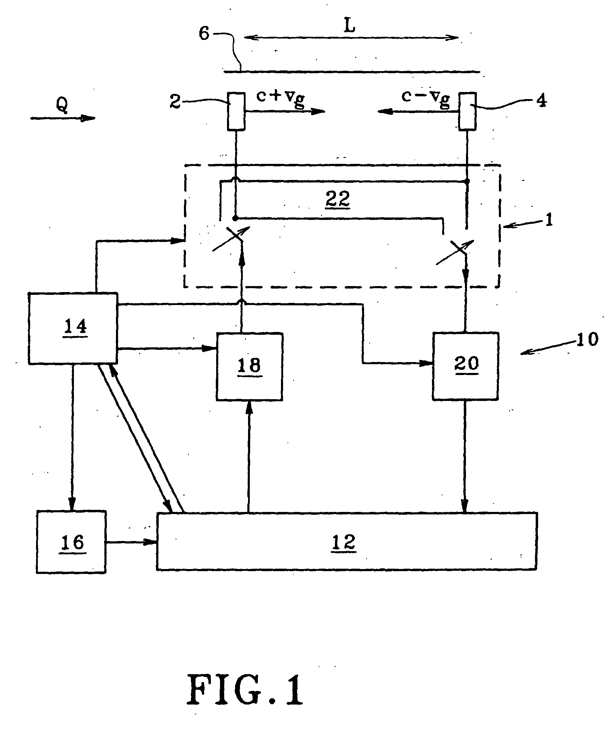

Comme représenté à la figure 1 et désigné dans son ensemble par la référence générale 1, un compteur de fluide et plus particulièrement un compteur de gaz à ultrasons comprend deux transducteurs à ultrasons 2 et 4 par exemple de type piézo-électrique montés face à face dans une conduite 6 dans laquelle circule un gaz dont on souhaite mesurer une grandeur physique, à savoir le débit. Les transducteurs à ultrasons 2 et 4 sont éloignés l'un de l'autre d'une distance L.

La vitesse du gaz est notée Vg et le débit du gaz varie continûment au cours du temps entre deux valeurs extrêmes $Q_{min}$ et $Q_{max}$. Dans le cas présent, les deux valeurs $Q_{min}$ et $Q_{max}$ déterminent l'étendue de la gamme métrologique du compteur et $Q_{min}$ est égale à zéro.

Selon un mode de réalisation de l'invention, le procédé vise à déterminer le paramètre physique représentant l'intégrale par rapport au temps du débit de gaz, à savoir le volume de gaz V, en suivant au plus près les variations du débit afin que les erreurs commises sur la détermination du volume restent en dessous d'un seuil d'erreur prédéterminé , et tout en espaçant le plus possible les instants de mesure du débit.

D'une manière générale, à un instant donné, on mesure le débit de gaz puis l'on détermine jusqu'à cet instant de mesure le volume de gaz qui s'est écoulé dans le compteur.

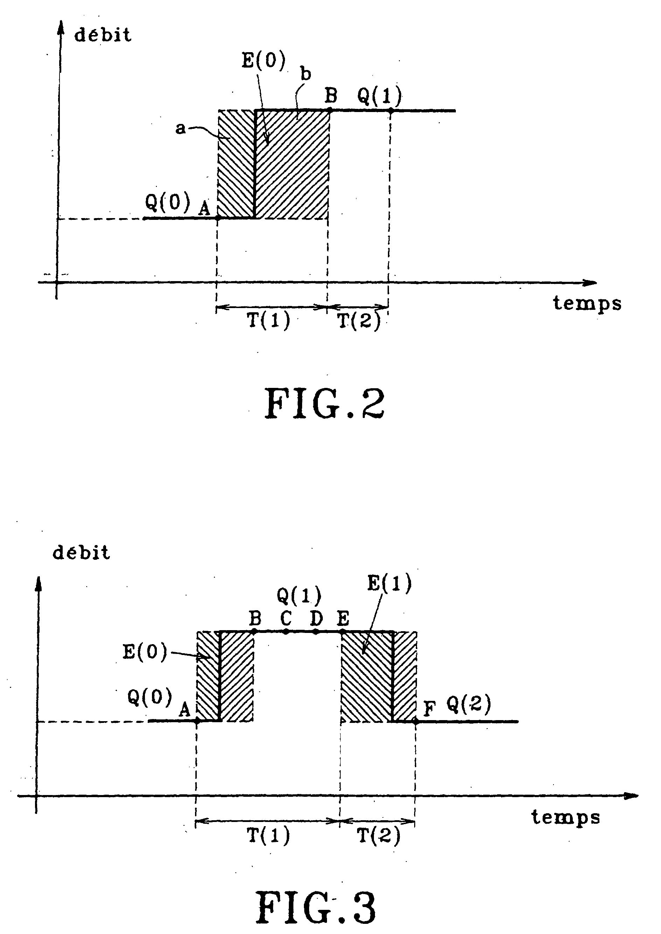

L'exemple qui suit et qui est illustré à la figure 2 va permettre de comprendre le principe de l'invention.

Sur la figure 2 qui représente une évolution par paliers du débit de gaz au cours du temps, le débit de gaz varie depuis une première valeur Q(0) jusqu'à une valeur Q(1) supérieure à Q(0).

Or, si la dernière mesure de débit correspond au point A et si la nouvelle mesure de débit correspond au point B, on s'aperçoit qu'en déterminant le volume de gaz écoulé entre les deux instants correspondants, c'est-à-dire pour les valeurs mesurées de débit Q(0) et

Q(1) espacées d'un intervalle de temps T(1), appelé temps d'échantillonnage, on commet une erreur réelle qui est représentée par l'aire hachurée b.

Cependant, il n'est pas possible de connaître avec précision l'erreur réelle qui vient d'être commise lors de la détermination du volume de gaz entre A et B étant donné que le temps d'échantillonnage T(1) n'est pas suffisamment court pour suivre au plus près les variations du débit de gaz.

Avantageusement, le procédé selon l'invention prévoit d'estimer cette première erreur théorique maximale E(0) qui a pu être commise lors de la détermination du volume de gaz quand le débit est passé de la valeur Q(0) à la valeur Q(1).

Cette erreur est représentée par les deux aires hachurées a et b sur la figure 2.

Cette erreur théorique maximale est ensuite comparée au seuil d'erreur prédéterminé $E_{max}$ et si cette erreur est inférieure à $E_{max}$, on la soustrait dudit seuil d'erreur prédéterminé $E_{max}$ afin d'obtenir un crédit d'erreur $E_{max}$ - E(0).

En fonction de ce crédit d'erreur, on détermine le plus grand temps d'échantillonnage qu'il est théoriquement possible de fixer pour effectuer la mesure de débit suivante sans dépasser ledit crédit d'erreur, ceci en tenant compte, d'une part, de la dernière mesure de débit Q(1) et, d'autre part, de la plus grande variation possible du débit à partir de ladite dernière mesure Q(1).

La plus grande variation possible du débit est fonction des valeurs de débit $Q_{min}$ et $Q_{max}$, c'est-à-dire 0 et $Q_{max}$ dans l'exemple décrit. Le nouveau temps d'échantillonnage T(2) s'exprime alors de la manière suivante

$$T(2) = \frac{E_{max - E(0)}}{|Q(1) - Q_{max}/2| + Q_{max}/2}$$

où l'expression $|Q(1) - Q_{max}/2| + Q_{max}/2$ représente la plus grande variation possible de débit à partir du débit Q(1).

Le temps d'échantillonnage est compris entre une valeur minimale et une valeur maximale prédéterminées.

La valeur minimale $T_S$ correspond au plus petit écart temporel possible entre deux mesures consécutives du débit et il est fixé par le temps nécessaire pour effectuer le mesure du débit et la détermination du volume de gaz. D'une manière générale le temps d'échantillonnage est alors un multiple entier N de $T_S$, à savoir $T = NT_S$.

A titre d'exemple numérique, Q(0) = 0, $Q_{max}$ = 6000 l/h et l'on considère que l'on dispose d'un seuil d'erreur prédéterminé tel qu'une erreur de 0,5% est tolérée pour un volume de gaz prédéterminé, appelé volume de calibration, égal à 100 litres.

Par conséquent, le seuil d'erreur est égal à 0,5 litre.

A partir d'un débit nul, la plus grande variation possible du débit est de 6000 l/h et, comme le seuil d'erreur est fixé à 0,5 l, cela détermine un temps d'échantillonnage T(1) = 0,5/6000 = 8,33 $10^{-5}$h

Si l'on a $T_S$ = 50ms, alors $T(1) = 6T_S$.

Supposons que le débit ait varié jusqu'à Q(1) = 4000 l/h à partir d'un débit nul, durant le temps d'échantillonnage $T(1) = 6T_S$.

Dans un tel cas, l'erreur théorique maximale induite E(0) lorsque l'on calcule le volume de gaz selon la formule $.V = Q(1) \times 6T_S$, est égale à $6T_S / 3600 \times 4000$ soit 0,334 litre.

Cette erreur est inférieure au seuil d'erreur de 0,5 l, si bien que l'on dispose d'un crédit d'erreur égal à (0,5 - 0,334), c'est-à-dire 0,166 litre pour effectuer la prochaine mesure.

Par conséquent, le temps d'échantillonnage T(2) suivant est déterminé pour que la variation de débit qui peut se produire n'induise pas une erreur supérieure à 0,166 litre.

Ce temps d'échantillonnage s'écrit

$$T(2) = \frac{0,5-0,334}{|4000-6000/2|+6000/2}$$

soit

$$T(2) = \frac{0,166}{4000} = 3\,Ts$$

On voit sur cet exemple numérique que l'on a divisé le temps d'échantillonnage par deux par rapport à la première valeur $T(1) = 6T_S$ mais, en revanche, cela a permis de préserver un crédit d'erreur maximum.

Plus généralement, pour chaque nouvelle mesure du débit, on détermine le volume de gaz correspondant et l'erreur théorique maximale induite par la détermination de ce volume.

Cette erreur est ajoutée aux erreurs précédemment déterminées, et la somme obtenue est comparée au seuil d'erreur prédéterminé $E_{max}$ afin de savoir si l'on dispose encore d'un certain crédit d'erreur qui permette d'espacer suffisamment les instants de mesure du débit tout en s'assurant de ne pas dépasser ledit seuil d'erreur, $E_{max}$.

La figure 3 représente une autre évolution possible du débit de gaz au cours du temps pour laquelle deux variantes consécutives de débit de gaz se succèdent, ce qui va faire ressortir un autre avantage du procédé selon l'invention.

Sur la figure 3, le débit de gaz varie de la valeur Q(0), valeur obtenue au point A, à la valeur obtenue au point B, et s'accompagne d'une erreur théorique maximale E(0) induite par la détermination du volume de gaz entre les deux instants de mesure consécutifs. Le temps d'échantillonnage suivant est fixé de la manière qui est décrite ci-dessus, en référence à la figure 2.

Dans le cas présent, il se trouve que les trois mesures successives du débit correspondant aux points C, D, E fournissent une valeur que l'on assimile à une même valeur Q(1) car les variations de débit autour de la première valeur obtenue au point B sont en deçà d'un seuil minimal de détection $Q_S$. Ce seuil $Q_S$ correspond au plus petit écart de débit mesurable par le procédé.

Ainsi, le débit de gaz se trouve sur un palier et la valeur correspondante du débit de ce palier Q(1) est affinée en moyennant les quatre mesures successives obtenues aux points B, C, D, E pendant la durée T(1) dudit palier. La valeur du volume de gaz correspondant est égale à Q(1) X T(1) et s'ajoute à l'ancienne valeur du volume déjà déterminée au point A.

Au bout du temps T(1), après avoir effectué la moyenne du débit sur le palier, on détermine le prochain temps d'échantillonnage en fonction du crédit d'erreur dont on dispose, $E_{max}$ - E(0), (ce crédit n'a pas varié puisqu'aucune erreur ne s'est produite depuis la variation du point A au point B et de la plus grande variation possible de débit à partir de $Q_{(1)}$, soit $|Q(1) - Q_{max}/2| + Q_{max}/2$.

Comme le montre la figure 3, au bout du temps d'échantillonnage T(2), on mesure la nouvelle valeur du débit Q(2), on détermine le volume de gaz correspondant T(2) X Q(2) en induisant une erreur théorique maximale E(1) que l'on calcule. Cette erreur E(1) est égale à T(2) [Q(2) - Q(1)] et est négative, c'est-à-dire que l'on surcompte le volume de gaz par rapport au volume réel ayant traversé le compteur de gaz. Par contre, lors de la variation précédente du débit de gaz de Q(0) à Q(1), le volume de gaz a été sous-compté.

Ainsi, de manière avantageuse, lorsque l'on effectue la somme des erreurs théoriques maximales pour connaître le crédit d'erreur dont on dispose, les erreurs vont se compenser partiellement ce qui va augmenter de manière inattendue ledit crédit d'erreur et donc cela va permettre d'espacer dans le temps la mesure suivante.

Un exemple de réalisation détaillé va maintenant être décrit en référence aux figures 1 et 3 à 8.

Un bloc électronique 10 est représenté schématiquement sur la figure 1 et a pour fonction, d'une part, d'alimenter électriquement les différents blocs fonctionnels qui seront décrits ci-après et, d'autre part, de commander le procédé de détermination de l'intégrale du débit de gaz conformément à l'invention.

Ce bloc électronique 10 comprend un microcontroleur 12 relié à une source d'énergie électrique 14, par exemple une pile, et à une horloge à quartz 16 dont la fréquence est par exemple de 10 MHz et qui est également alimentée par la source d'énergie 14. Le microcontroleur 12 est également relié à deux blocs, l'un dit d'émission 18 et l'autre dit de réception 20, tous deux alimentés par la source d'énergie 14. Chacun des blocs comprend par exemple un amplificateur opérationnel et un convertisseur numérique/analogique pour le bloc d'émission 18, et un amplificateur opérationnel et un convertisseur analogique/numérique pour le bloc de réception 20.

Le bloc électronique 10 comprend également un circuit de commutation 22 alimenté par la source d'énergie 14 et relié, d'une part, aux blocs d'émission 18 et de réception 20 et, d'autre part, aux deux transducteurs à ultrasons 2 et 4.

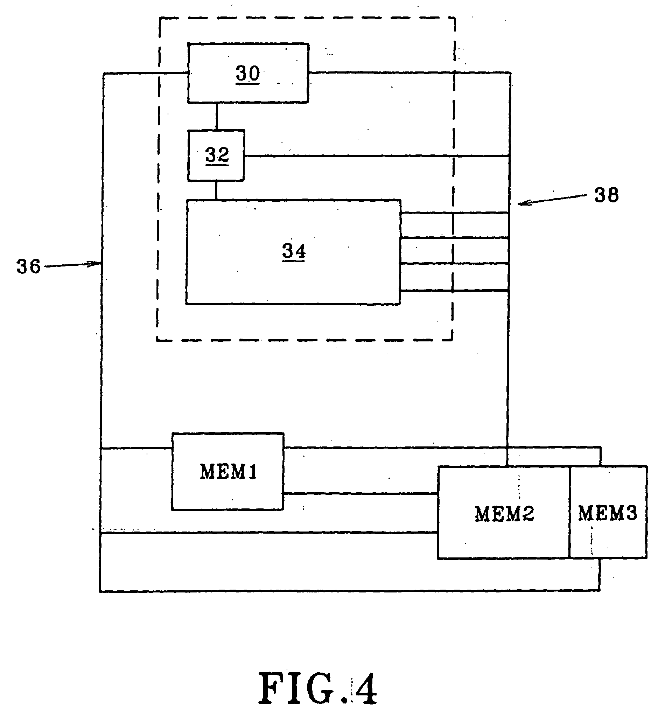

Tel que représenté à la figure 4, le microcontroleur 12 comprend un séquenceur 30, une unité arithmétique et logique 32, des registres accumulateurs 34 où sont effectués les différents calculs et stockés temporairement les résultats de ces calculs, des premiers moyens de mise en mémoire du débit, du temps d'échantillonnage et de l'erreur théorique maximale correspondants formés par une mémoire vive de type FIFO (First In First Out) qui est constituée de registres à décalage et appelée par la suite MEM1.

Le microcontroleur 12 tel que représenté à la figure 4 comprend également des second moyens de mise en mémoire du volume de gaz formés par une mémoire morte de type EEPROM (Electrically Erasable Programmable Read Only Memory), appelée par la suite MEM2. Une autre mémoire morte de type ROM (Read Only Memory) appelée ci-après MEM3 contient la série d'instructions permettant de déterminer en temps discret le volume de gaz selon l'invention.

Un bus d'adresses 36 relie le séquenceur 30 aux différentes mémoires MEM1, MEM2, et MEM3. Un bus de données 38 met en relation le séquenceur 30, l'unité arithmétique et logique 32 et chacun des registres accumulateurs 34 avec chacune des mémoires.

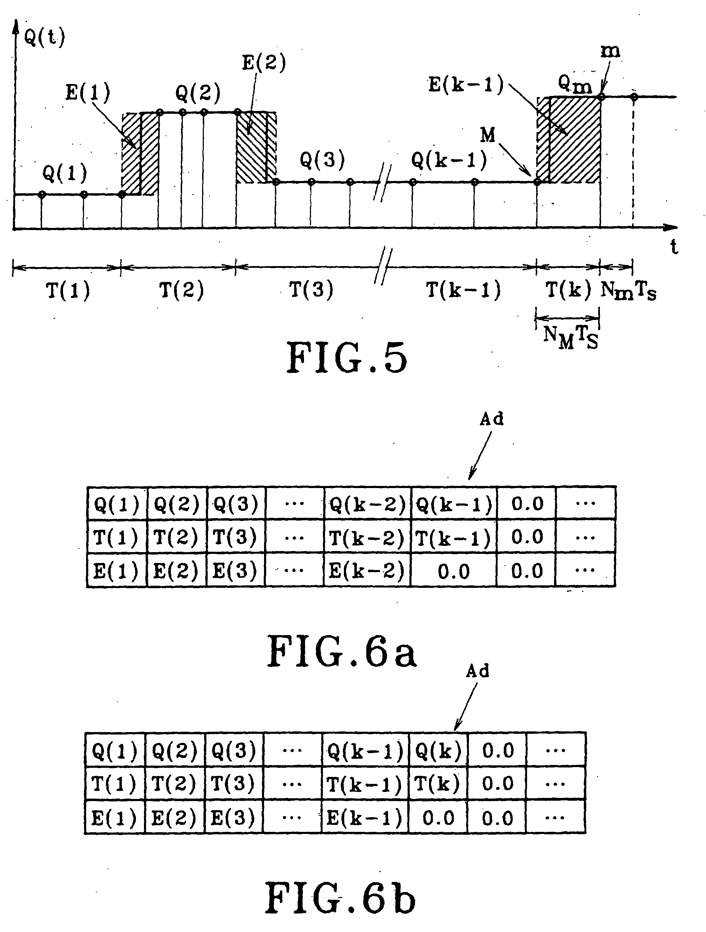

La courbe représentant un exemple de l'évolution au cours du temps du débit de gaz est indiquée à la figure 5.

Par souci de simplification, on n'a représenté sur cette courbe que des variations de débit par palier mais il est entendu que le procédé s'applique à tout type de variation de débit. A chaque palier correspondent une valeur de débit moyennée Q(1), Q(2), ... , en fonction des différentes mesures de débit effectuées, une valeur de temps T(1), T(2), ... , représentant la durée du palier et obtenue en faisant la moyenne des temps d'échantillonnage écoulés entre chacune desdits mesures successives de débit, ainsi que l'erreur théorique maximale E(1), E(2), ... , commise sur la détermination du volume de gaz lors du passage d'un palier au palier suivant.

Chacune des valeurs de débit, de temps et d'erreur définies précédemment est mémorisée dans un des registres de la mémoire MEM1 telle que représentée à la figure 6a.

On se place dans le cas où la dernière mesure de débit correspond au point M de la courbe d'évolution du débit (Fig. 5) et, ainsi, les dernières valeurs mémorisées dans la mémoire MEM1 correspondent aux valeurs Q(k-1) et T(k-1) mémorisées à l'adresse courante d'écriture Ad (Fig. 6a).

Dans la suite de l'exposé, les valeurs Q(Ad) et T(Ad) désigneront les dernières valeurs mémorisées et il est convenu que l'indice m affecté au débit Q et au volume V indiquera respectivement la valeur du débit qui vient d'être mesurée et le volume de gaz qui vient d'être déterminé à partir de cette valeur de débit Qm.

Au cours du procédé, le séquenceur vient lire au moyen du bus d'adresses 36 la série d'instructions du procédé selon l'invention contenues dans la mémoire MEM3.

Le bloc électronique 10 laisse s'écouler un temps $N_M T_S$ après la dernière mesure correspondant au point M avant que ne soit déclenchée une nouvelle mesure du débit de gaz Qm au point m (Fig.5).Le pas d'échantillonnage $N_M$ a été déterminé par le procédé à partir des résultats obtenus lors de la mesure du débit au point M et ce pas peut varier d'une mesure à l'autre.

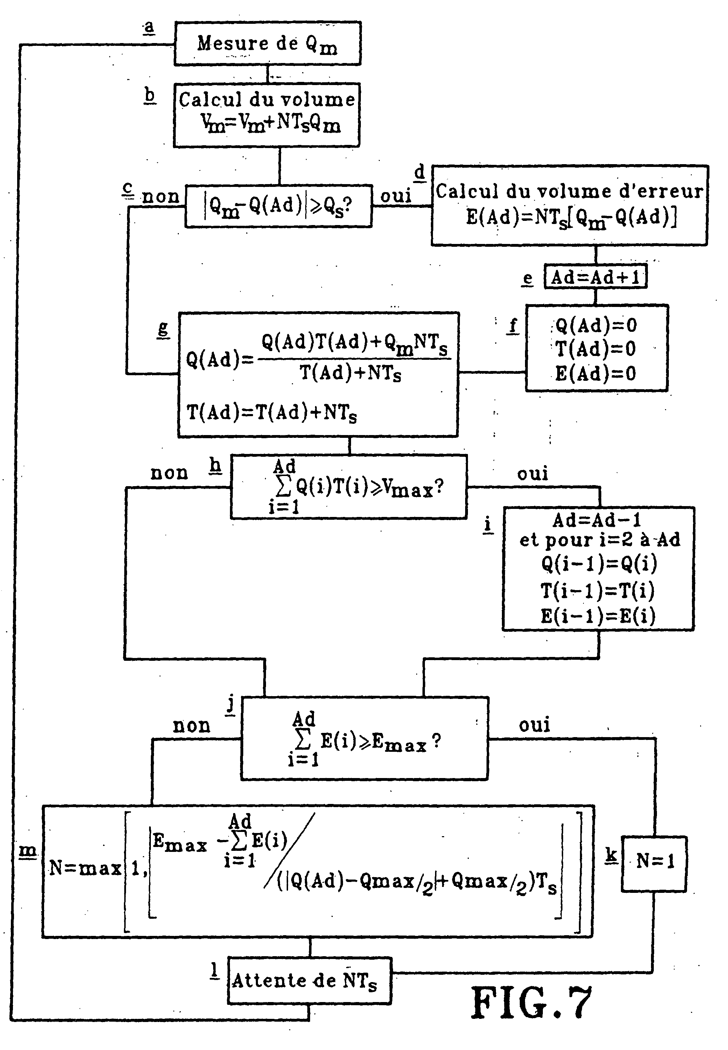

Pour la clarté de l'exposé, les pas d'échantillonnage successifs déterminés respectivement après les mesures de débit aux points M et m seront distingués par un indice respectivement égal à M et m bien que le pas d'échantillonnage sur la figure 7 soit désigné uniquement par la lettre N.

Après la mesure de débit Qm, le procédé selon l'invention va déterminer le nouveau temps d'échantillonnage $N_m T_S$ à adopter en vue de la mesure suivante de débit.

Le déclenchement d'une mesure s'effectue de la manière suivante: le séquenceur 30 active le bloc d'émission 18 pour envoyer un signal électrique à l'un 2 des transducteurs, active également la source d'énergie électrique 14 qui commande le circuit de commutation 22 et met ainsi en connexion ledit bloc d'émission 18 et ledit transducteur 2 ainsi que le bloc de réception 20 et le transducteur 4.

Le signal électrique excite le transducteur 2 qui émet un train d'ondes ultrasonores dans le gaz à la vitesse C dans le sens de la circulation du gaz à un moment précis qui est repéré par l'horloge 16 (figure 1). Au bout d'un temps $t_1$ déterminé par l'horloge 16, le transducteur 4 reçoit le train d'ondes ultrasonores.

Le séquenceur 30 commande ensuite l'inversion du circuit de commutation 22 afin que, d'une part, le bloc d'émission 18 soit maintenant relié au transducteur 4 et, d'autre part, le bloc de réception 20 soit en relation avec le transducteur 2. De la même manière, un second train d'ondes ultrasonores est émis par le transducteur 4 en direction du transducteur 2 dans le sens opposé à la circulation du gaz et l'horloge détermine le temps $t_2$ nécessaire à la propagation dudit train d'ondes ultrasonores (figure 1).

Étant donné que les temps de propagation $t_1$ et $t_2$ sont exprimés par les relations suivantes:

$$t_1 = L / (C\text{-}Vg) \qquad t_2 = L / (C\text{+}Vg)$$

l'unité arithmétique et logique 32 calcule la vitesse Vg du gaz

$$Vg = \frac{L}{2}\left[\frac{1}{t_2} - \frac{1}{t_1}\right]$$

et en déduit une mesure $Q_m$ du débit de gaz

$$Q_m = S\frac{L}{2}\left[\frac{1}{t_2} - \frac{1}{t_1}\right]$$

où S représente la section interne de la conduite 6.

Cette étape de mesure correspond à l'étape $\underline{a}$ du procédé selon l'invention illustré par l'organigramme de la figure 7.

L'unité arithmétique et logique 32 calcule ensuite l'intégrale de la mesure Qm du débit de gaz suivant l'expression Vm= Vm+$N_M$TsQm en ajoutant à l'ancienne valeur Vm de l'intégrale obtenue pour la précédente mesure de débit de gaz stockée dans la mémoire MEM 2, le produit $N_M$TsQm (étape $\underline{b}$ de la figure 7).

On remplace ensuite dans la mémoire MEM2 l'ancienne valeur de l'intégrale Vm par la nouvelle valeur ainsi calculée. Cette valeur est une valeur absolue du volume de gaz.

L'étape suivante du procédé consiste à vérifier s'il y a eu une transition détectable de débit de gaz entre tes deux dernières valeurs Qm et Q(Ad). Ainsi, l'unité arithmétique et logique 32 calcule l'expression $|Qm - Q(Ad)|$ et la compare à la valeur seuil prédéterminée Qs stockée dans la mémoire MEM3 (étape $\underline{c}$).

Deux cas peuvent alors se présenter:

a) soit $|Qm - Q(Ad)| \geq Qs$, ce qui signifie que le débit de gaz a varié de manière significative tel que représenté à la figure 5

b) soit $|Qm - Q(Ad)| < Qs$, auquel cas on ne peut détecter une variation du débit de gaz.

Comme représenté à la figure 5, l'augmentation du débit de gaz de la valeur Q(k-1) (Q(Ad)) à la valeur Qm a théoriquement pu introduire une erreur E(k-1) (E(Ad)) repérée par l'aire hachurée sur la figure 5 lors du dernier calcul de l'intégrale Vm du débit. L'erreur théorique maximale qui a pu être commise lors de cette transition de débit est donnée par la formule suivante E(Ad) = NTs[Qm-Q(Ad)] (étape d) et cette valeur est enregistrée dans la mémoire MEM1 à l'adresse d'écriture Ad (Fig.6a), adresse pour laquelle sont déjà mémorisées Q(Ad) et T(Ad).

L'adresse d'écriture dans la mémoire MEM1 est alors incrémentée (étape e) par le séquenceur 30 de telle façon que Ad = Ad +1, et les valeurs de Q, T et E à l'adresse d'écriture Ad sont initialisées à 0 (étape f).

L'unité arithmétique et logique 32 effectue ensuite le calcul des nouvelles valeurs de Q et de T à mémoriser à l'adresse d'écriture Ad suivant l'étape g :

$$Q(k) = Q(Ad) = \frac{Q(Ad)\,T(Ad) + QmNTs}{T(Ad) + NTs} = Qm$$

et T(k) = T(Ad)= T(Ad)+$N_M$Ts = $N_M$Ts et ces valeurs sont stockées dans la mémoire MEM1 ainsi que représenté à la figure 6b.

Dans le cas b) évoqué ci-dessus et déjà décrit en référence à la figure 3, la mesure de débit Qm se situe sur un palier étant donné qu'aucune variation de débit n'a été constatée. Ce cas peut s'interpréter en référence à la figure 6a qui illustre l'état de mémorisation de la mémoire MEM1 après la dernière mesure de débit effectuée. L'étape correspondante g du procédé conforme à l'invention consiste à affiner la mesure du débit de gaz en effectuant une moyenne avec la mesure précédente stockée à l'adresse Ad

$$Q(k-1) = Q(Ad) = \frac{Q(Ad)\,T(Ad) + QmN_MTs}{T(Ad) + N_MTs}$$

et à incrémenter la durée du palier T(k-1) = T(Ad)= T(Ad) + $N_M$Ts.

Les valeurs Q(Ad) et T(Ad) ainsi calculées sont stockées à l'adresse d'écriture Ad de la mémoire MEM1 et viennent affiner les anciennes valeurs Q(k-1) et T(k-1) (Fig.6a).

Il est à noter que lorsqu'une transition de débit a été détectée (cas a), il n'est pas obligatoire d'utiliser les formules précédentes de l'étape g donnant les nouvelles valeurs de Q et de T, il suffit d'enregistrer les valeurs Qm et $N_MT_S$.

Cependant, du point de vue de l'algorithme (figure 7), il peut être intéressant de ne prévoir qu'une opération (étape g) pour englober les deux cas visés en a) et b).

Selon l'étape h du procédé, l'unité arithmétique et logique 32 du microcontroleur 12 procède au calcul de la somme des volumes de gaz mesurés depuis les premières valeurs Q(1) et T(1) stockées dans la mémoire MEM1 jusqu'aux dernières valeurs Q(Ad) et T(Ad).

Cette somme est ensuite comparée au volume de calibration prédéfini $V_{max}$ stocké dans la mémoire MEM3. Ceci conduit à deux possibilités (étape h).

Soit

$$\sum_{i=1}^{Ad} Q(i)T(i) \geq V_{max},$$

auquel cas le séquenceur 30 décale d'une unité tous les registres de la mémoire MEM1 de telle façon que Ad = Ad-1 et pour i = 2 à Ad, Q(i-1) = Q(i), T(i-1) = T(i), E(i-1) = E(i) (étape i).

Les premières valeurs Q(1), T(1) et E(1) sont alors supprimées.

Ainsi, cela permet de diminuer la somme des erreurs théoriques maximales

$$\sum_{i=1}^{Ad} E(i)$$

afin qu'elle reste inférieure au seuil d'erreur $E_{max}$ ce qui permet d'augmenter le crédit d'erreur et par là même d'espacer dans le temps les instants de mesure suivants.

Soit

$$\sum_{i=1}^{Ad} Q(i)T(i) < V_{max}$$

et dans ce cas l'on accède directement à l'étape j suivante.

Après avoir envisagé les deux cas de figure précédents de l'étape h, l'unité arithmétique et logique 32 calcule ensuite la somme des erreurs théoriques maximales

$$\sum_{i=1}^{Ad} E(i)$$

commises depuis les premières valeurs stockées dans la mémoire MEM1 et la compare au seuil d'erreur prédéterminé $E_{max}$ (étape j) stocké dans la mémoire MEM3. Ce seuil est fixé pour la valeur du volume de calibration $V_{max}$, ce qui signifie qu'une erreur maximale de $E_{max}$ est autorisée pour la détermination d'un volume de gaz égal à $V_{max}$.

Si la somme

$$\sum_{i=1}^{Ad} E(i)$$

est supérieure au seuil d'erreur $E_{max}$, alors, le pas d'échantillonnage $N_m$ de la mesure suivante est fixé à 1 (étape k) et le microcontroleur laisse s'écouler un temps d'échantillonnage Ts avant d'alimenter les deux blocs 18, 20 et le circuit de commutation 22 pour procéder à une nouvelle mesure de débit.

Malgré le fait que dans un tel cas le crédit d'erreur est épuisé lors de cette nouvelle mesure de débit, après le temps d'échantillonnage Ts, il est judicieux de recalculer après la prochaine mesure la somme des erreurs théoriques maximales commises car, comme il a été constaté précédemment, la somme est algébrique et donc ces erreurs peuvent se compenser partiellement.

Ainsi, même lorsque l'on se trouve au dessus du seuil d'erreur maximal autorisé lors d'une mesure, il est très possible de se retrouver en dessous de ce seuil lors de la mesure suivante.

Dans un tel cas, le procédé permet d'optimiser le pas d'échantillonnage suivant en tenant compte du crédit d'erreur pour ne pas dépasser le seuil maximal autorisé $E_{max}$.

Par contre, si la somme

$$\sum_{i=1}^{Ad} E(i)$$

est inférieure au seuil d'erreur $E_{max}$, alors le pas d'échantillonnage est donné par la formule de l'étape suivante m qui prend également en compte la dernière mesure du débit Q(Ad):

$$N_m = \max\left[1, \left[\left| \frac{E_{max} - \sum_{i=1}^{Ad} E(i)}{(|Q(Ad) - Q_{max}/2| + Q_{max}/2)Ts} \right|\right]\right]$$

Une nouvelle mesure de débit est alors déclenchée au bout du temps d'échantillonnage $N_m Ts$ ainsi que re-présenté sur la figure 5.

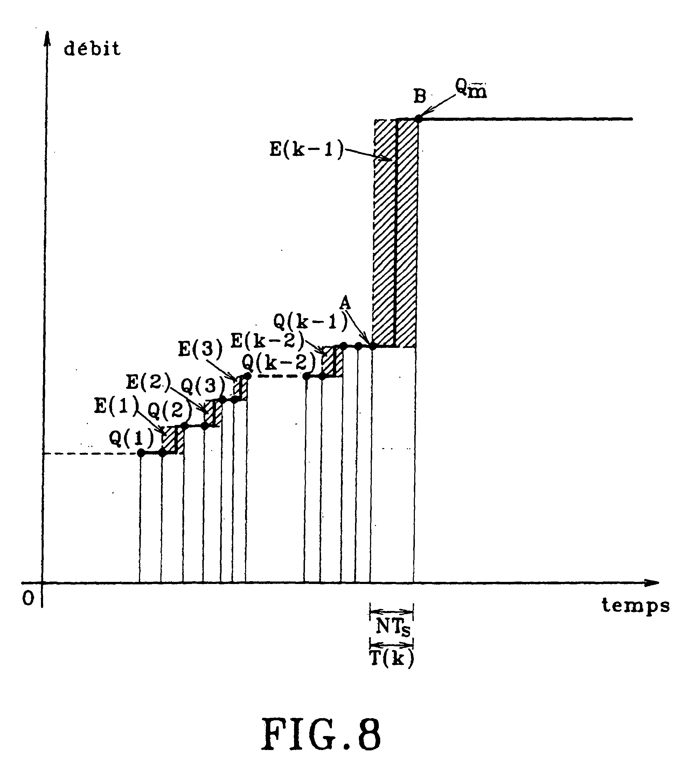

Un exemple particulier de l'évolution du débit de gaz est représenté à la figure 8. Cette figure illustré le cas où le volume de calibration est presque atteint au point de mesure A et pour une somme d'erreurs théoriques maximales proche du seuil d'erreur prédéterminé $E_{max}$. La mesure courante du débit Qm correspondant au point B, la détermination du volume de gaz Vm correspondante, l'erreur théorique maximale E(k-1) commise lors de la détermination de ce volume, la mémorisation des valeurs de Q, T, E et l'incrémentation par le volume $Q_m NTs$ de la somme

$$\sum_{i=1}^{Ad} Q(i)T(i)$$

correspondant aux valeurs mémorisées dans la mémoire MEM1 sont réalisés conformément aux étapes <u>a</u> à <u>h</u> du procédé tel que précédemment décrit en référence aux figures 1 et 3 à 7.

Toutefois, dans le cas particulier de la figure 8, la nouvelle somme

$$\sum_{i=1}^{Ad} Q(i)T(i)$$

incrémentée du dernier volume $Q_m NTs$ dépasse largement le volume de calibration $V_{max}$.

Dans un tel cas, si l'on se contente de décaler d'une unité tous les registres de la mémoire MEM1 et donc d'éliminer les premières valeurs Q(1), T(1) et E(1) (étape <u>i</u>), lors de la prochaine mesure de débit la somme

$$\sum_{i=1}^{Ad} Q(i)T(i)$$

sera toujours supérieure au volume de calibration ce qui peut être pénalisant car l'on comptabilise d'avantage d'erreurs qu'il n'est nécessaire.

Aussi, selon une variante-de l'invention, il est particulièrement avantageux de décaler les registres de la mémoire MEM1 d'une unité puis de recalculer tout de suite la somme

$$\sum_{i=1}^{Ad} Q(i)T(i)$$

et de décaler à nouveau lesdits registres tant que cette somme n'est pas inférieure au volume de calibration. On supprime ainsi les premières valeurs respectives de Q, T et E et donc plusieurs erreurs théoriques maximales consécutives.

Au cours de l'étape suivante <u>j</u>, la somme des erreurs théoriques maximales sera alors calculée sur un volume inférieur au volume de calibration $V_{max}$. Cette variante permet de réduire la consommation énergétique du compteur de gaz en raison du fait que le crédit d'erreur va se trouver de nouveau augmenté par cette opération et que les instants de mesure suivants seront plus espacés dans le temps.

**Revendications**

1. Procédé de détermination d'un paramètre physique représenté par l'évolution au cours du temps d'une grandeur physique (G) pouvant varier entre une valeur minimale ($G_{min}$) et une valeur maximale ($G_{max}$), **caractérisé en ce qu'**il consiste à :

   - mesurer ladite grandeur physique (G) à intervalles de temps variables appelés temps d'échantillonnage,
   - à déterminer après chaque mesure de la grandeur physique (G) la valeur correspondante du paramètre physique représentant l'intégrale par rapport au temps de la grandeur physique, ainsi que la variation de ladite grandeur physique par rapport à un seuil prédéterminé ($G_S$),
   - à calculer l'erreur théorique maximale induite par la détermination du paramètre physique correspondant.
   - à sommer les erreurs théoriques maximales induites pour les différentes mesures successives effectuées.
   - à comparer cette somme avec le seuil d'erreur prédéterminé ($E_{max}$), et
   - à ajuster le temps d'échantillonnage avant chaque nouvelle mesure de ladite grandeur physique (G) en fonction du résultat de ladite comparaison, de façon à ne pas dépasser un seuil d'erreur prédéterminé ($E_{max}$) lors de la détermination de la valeur du paramètre physique correspondant à ladite nouvelle mesure de la grandeur physique (G).

2. Procédé selon la revendication 1, **caractérisé en ce que** l'on soustrait la somme des erreurs théoriques maximales du seuil d'erreur prédéterminé pour obtenir un crédit d'erreur, le temps d'échantillonnage étant déterminé en fonction de ce crédit d'erreur.

3. Procédé selon la revendication 2, **caractérisé en ce que** le temps d'échantillonnage est d'autant plus grand que le crédit d'erreur est élevé.

4. Procédé selon la revendication 2 ou 3, **caractérisé en ce que** le temps d'échantillonnage est déterminé en fonction du crédit d'erreur et de la plus grande variation possible de la grandeur physique qui est fonction des valeurs minimales ($G_{min}$), maximales ($G_{max}$) et de la dernière valeur mesurée de ladite grandeur physique.

5. Procédé selon l'une des revendications 1 à 4, **caractérisé en ce que** le temps d'échantillonnage est compris entre une valeur minimale ($T_S$) et une valeur maximale prédéterminées.

6. Procédé selon l'une des revendications 1 à 5, **caractérisé en ce que** la somme des erreurs théoriques maximales est calculée pour une valeur du paramètre physique représenté par l'évolution au cours du temps de la grandeur physique (G) au plus égale à une valeur prédéterminée du paramètre physique.

7. Procédé selon la revendication 6, **caractérisé en ce que**, lorsque la valeur prédéterminée du paramètre physique est obtenue après une série de mesures successives de la grandeur physique (G), alors on ne tient plus compte de la (ou des) première(s) valeur(s) respective(s) de l'erreur théorique maximale pour le calcul de la somme des erreurs théoriques maximales.

8. Dispositif de détermination d'un paramètre physique représenté par l'évolution au cours du temps d'une grandeur physique (G) pouvant varier entre une valeur minimale ($G_{min}$) et une valeur maximale ($G_{max}$), pour la mise en oeuvre du procédé selon l'une des revendications 1 à 10, **caractérisé en ce que** ledit dispositif comprend :

   - des moyens de mesure (2,4,12,14,16,18,20,22) de ladite grandeur physique (G) suivant des intervalles de temps variables appelés temps d'échantillonnage,
   - des moyens (32) de détermination de la valeur correspondante du paramètre physique, représentant l'intégrale par rapport au temps de la grandeur physique, à partir de ladite mesure de la grandeur physique,
   - des moyens (32) de comparaison de la variation de la grandeur physique entre deux mesures successives de celle-ci par rapport à un seuil prédéterminé ($G_S$).
   - des moyens de détermination de l'erreur théorique maximale induite par la détermination dudit paramètre physique, et
   - des moyens de calcul de la somme des erreurs théoriques maximales induites pour les différentes mesures successives effectuées,

- des moyens de comparaison de ladite somme avec le seuil d'erreur prédéterminé ($E_{max}$), et
- des moyens de détermination du temps d'échantillonnage avant chaque nouvelle mesure de la grandeur physique, ledit temps d'échantillonnage étant déterminé de façon à ne pas dépasser un seuil d'erreur prédéterminé ($E_{max}$) lors de la détermination de la valeur du paramètre physique correspondant à ladite nouvelle mesure de la grandeur physique.

9. Dispositif selon la revendication, **caractérisé en ce qu'**il comprend des premiers moyens (MEM1) de mise en mémoire de mesures successives de la grandeur physique (G), de temps d'échantillonnage et d'erreurs théoriques maximales correspondants.

10. Dispositif selon la revendication ç, **caractérisé en ce que** les premiers moyens de mise en mémoire comprennent un registre à décalage (MEM1).

11. Dispositif selon la revendication 8, **caractérisé en ce qu'**il comprend des second moyens (MEM2) de mise en mémoire des valeurs successives du paramètre physique.

12. Dispositif selon la revendication 9, **caractérisé en ce qu'**il comprend en outre des moyens (32) de sommation des erreurs théoriques maximales mises en mémoire, de comparaison de cette somme avec le seuil d'erreur prédéterminé ($E_{max}$) et de détermination d'un temps d'échantillonnage adapté au résultat de ladite comparaison.

13. Dispositif selon les revendications 9 et 10, **caractérisé en ce qu'**il comprend des moyens (32) de détermination de la valeur du paramètre physique correspondant aux mesures successives de la grandeur physique (G), aux temps d'échantillonnage et aux erreurs théoriques maximales mémorisés, de comparaison de ladite valeur avec une valeur prédéterminée du paramètre physique, ainsi que des moyens (30) pour éliminer des premiers moyens (MEM1) de mise en mémoire la (ou les) première(s) erreur(s) théorique(s) maximale(s) mémorisée(s) lorsque la valeur prédéterminée du paramètre est atteinte.

14. Application du procédé selon l'une des revendications 1 à 7 et du dispositif selon l'une des revendications 8 à 13 au comptage de fluide.

**Claims**

1. A method of determining a physical parameter represented by variation in time of a physical magnitude (G) capable of varying between a minimum value ($G_{min}$) and a maximum value ($G_{max}$), the method consisting in :

   - measuring said physical magnitude (G) at variable time intervals referred to as sampling times,
   - determining after each measurement of the physical magnitude (G) the corresponding value of the physical parameter representing the time integral of the physical magnitude, and also the variation of said physical magnitude relative to a predetermined threshold ($G_S$),
   - calculating the theoretical maximum error that could occur in the determination of the corresponding physical parameter,
   - summing the theoretical maximum errors that could have occurred for the various successive measurements,
   - comparing the sum with a predetermined error threshold ($E_{max}$), and
   - adjusting the sampling time prior to each new measurement of said physical magnitude (G) as a function of the result of said comparison so that the predetermined error threshold ($E_{max}$) is not exceeded while determining the value of the physical parameter corresponding to said new measurement of the physical magnitude (G).

2. A method according to claim 1, wherein the sum of said theoretical maximum errors is subtracted from the predetermined error threshold to obtain an error credit, the sampling time being determined as a function of the error credit.

3. A method according to claim 2, wherein the greater the error credit, the longer the sampling time.

4. A method according to claim 2 or 3, wherein the sampling time is determined as a function of the error credit and of the greatest variation possible in the physical magnitude, which variation is a function of the minimum ($G_{min}$) and maximum values ($G_{max}$), and of the most recently measured value of said physical magnitude.

5. A method according to one of the claims 1 to 4, wherein the sampling time lies between a predetermined minimum value ($T_S$) and a predetermined maximum value.

6. A method according to one of the claims 1 to 5, wherein the sum of the theoretical maximum errors is calculated for a value of the physical parameter represented by variation in time of the physical magnitude (G) that is not greater than a predetermined value of the physical parameter.

7. A method according to claim 6, wherein, when the predetermined value of the physical parameter is obtained after a series of successive measurements of the physical magnitude (G), then account is no longer taken of the respective first value(s) of the theoretical maximum error in calculating the sum of the theoretical maximum errors.

8. Apparatus for determining a physical parameter represented by variation in time of a physical magnitude (G) capable of varying between a minimum value ($G_{min}$) and a maximum value ($G_{max}$), the apparatus comprising:

   - measurement means (2, 4, 12, 14, 16, 18, 20, 22) for measuring said physical magnitude (G) at variable time intervals referred to as sampling times,
   - means (32) for determining the corresponding value of the physical parameter representing the time integral of the physical magnitude, on the basis of said measured physical magnitudes,
   - means (32) for comparing the variation of the physical magnitude between two successive measurements thereof relative to a predetermined threshold ($G_S$),
   - means for determining the theoretical maximum error that could have occurred in the determination of said physical parameter,
   - means for calculating the sum of the theoretical maximum errors that could have occurred for the various successive measurements that have been performed,
   - means for comparing said sum with a predetermined error threshold ($E_{max}$), and
   - means for determining the sampling time prior to each new measurement of the physical magnitude, said sampling time being determined so as to ensure that the predetermined error threshold ($E_{max}$) is not exceeded while determining the value of the physical parameter corresponding to said new measurement of the physical magnitude.

9. Apparatuses according to claim 8, comprising first memory means (MEM1) for storing corresponding successive measurements of the physical magnitude (G), sampling times, and corresponding theoretical maximum errors.

10. Apparatus according to claim 9, wherein the first memory means comprise a shift register (MEM1).

11. Apparatus according to claim 8, comprising second memory means (MEM2) for storing successive values of the physical parameter.

12. Apparatus according to claim 9, further comprising means (32) for summing the stored theoretical maximum errors, for comparing said sum with the predetermined error threshold ($E_{max}$), and for determining a sampling time adapted to the result of said comparison.

13. Apparatus according to claims 9 and 10, comprising means (32) for determining the value of the physical parameter corresponding to stored successive measurements of the physical magnitude (G), the sampling times, and the theoretical maximum errors, and for comparing said value with a predetermined value of the physical parameter, and means (30) for losing the first stored theoretical maximum error(s) from the first memory means (MEM1) when the predetermined value of the parameter has been reached.

14. An application of the method according to one of the claims 1 to 7 and of the apparatus according to one of claims 8 to 13 to fluid metering

**Patentansprüche**

1. Verfahren zum Bestimmen eines physikalischen Parameters, der durch die zeitliche Entwicklung einer physikalischen Größe G repräsentiert wird, die sich zwischen einem Minimalwert ($G_{min}$) und einem Maximalwert ($G_{max}$) ändern kann,
   **dadurch gekennzeichnet, daß** es darin besteht:

**14**

- die physikalische Größe (G) in veränderlichen Zeitintervallen, die Abtastzeiten genannt werden, zu messen,

- nach jeder Messung der physikalischen Größe (G) den entsprechenden Wert des physikalischen Parameters, der das Zeitintegral der physikalischen Größe repräsentiert, sowie die Änderung der physikalischen Größe in bezug auf einen vorgegebenen Schwellenwert ($G_S$) zu bestimmen,

- den maximalen theoretischen Fehler, der durch die Bestimmung des entsprechenden physikalischen Parameters eingeführt wird, zu berechnen,

- die eingeführten maximalen theoretischen Fehler fiir die aufeinanderfolgenden verschiedenen ausgeführten Messungen zu summieren,

- diese Summe mit dem vorgegebenen Fehlerschwellenwert ($E_{max}$) zu vergleichen und

- die Abtastzeit vor jeder neuen Messung der physikalischen Größe (G) in Abhängigkeit vom Ergebnis des Vergleichs in der Weise einzustellen, daß ein vorgegebener Fehlerschwellenwert ($E_{max}$) bei der Bestimmung des Wertes des der neuen Messung der physikalischen Größe (G) entsprechenden physikalischen Parameters nicht überschritten wird.

2. Verfahren nach Anspruch 1, **dadurch gekennzeichnet, daß** die Summe der maximalen theoretischen Fehler von dem vorgegebenen Fehlerschwellenwert subtrahiert wird, um einen Fehlerkredit zu erlangen, wobei die Abtastzeit in Abhängigkeit von diesem Fehlerkredit bestimmt wird.

3. Verfahren nach Anspruch 2, **dadurch gekennzeichnet, daß** die Abtastzeit um so größer ist, je höher der Fehlerkredit ist.

4. Verfahren nach Anspruch 2 oder 3, **dadurch gekennzeichnet, daß** die Abtastzeit in Abhängigkeit vom Fehlerkredit und von der größten möglichen Änderung der physikalischen Größe, die von dem Minimalwert ($G_{min}$), dem Maximalwert ($G_{max}$) und von dem zuletzt gemessenen Wert der physikalischen Größe abhängt, bestimmt wird.

5. Verfahren nach einem der Ansprüche 1 bis 4, **dadurch gekennzeichnet, daß** die Abtastzeit zwischen einem vorgegebenen Minimalwert ($T_S$) und einem vorgegebenen Maximalwert liegt.

6. Verfahren nach einem der Ansprüche 1 bis 5, **dadurch gekennzeichnet, daß** die Summe der maximalen theoretischen Fehler für einen Wert des physikalischen Parameters, der durch die zeitliche Entwicklung der physikalischen Größe (G) repräsentiert wird, der höchstens gleich einem vorgegebenen Wert des physikalischen Parameters ist, berechnet wird.

7. Verfahren nach Anspruch 6, **dadurch gekennzeichnet, daß** der vorgegebene Wert des physikalischen Parameters nach einer Reihe aufeinanderfolgender Messungen der physikalischen Größe (G) erhalten wird, wobei dann der (oder die) jeweilige(n) erste(n) Wert(e) des maximalen theoretischen Fehlers für die Berechnung der Summe der maximalen theoretischen Fehler unberücksichtigt bleibt (bleiben).

8. Vorrichtung zum Bestimmen eines physikalischen Parameters, der durch die zeitliche Entwicklung einer physikalischen Größe (G) repräsentiert wird, die sich zwischen einem Minimalwert ($G_{min}$) und einem Maximalwert ($G_{max}$) ändern kann, für die Ausführung des Verfahrens nach einem der Ansprüche 1 bis 7, **dadurch gekennzeichnet, daß** die Vorrichtung umfaßt:

- Mittel (2, 4, 12, 14, 16, 18, 20, 22) zum Messen der physikalischen Größe (G) in veränderlichen Zeitintervallen, die Abtastzeiten genannt werden,

- Mittel (32) zum Bestimmen des entsprechenden Wertes des physikalischen Parameters, der das Zeitintegral der physikalischen Größe repräsentiert, anhand der Messung der physikalischen Größe,

- Mittel (32) zum Vergleichen der Änderung der physikalischen Größe zwischen zwei aufeinanderfolgenden Messungen dieser Größe in bezug auf einen vorgegebenen Schwellenwert ($G_S$),

- Mittel zum Bestimmen des maximalen theoretischen Fehlers, der durch die Bestimmung des physikalischen Parameters eingeführt wird, und

- Mittel zum Berechnen der Summe der eingeführten maximalen theoretischen Fehler für die verschiedenen ausgeführten aufeinanderfolgenden Messungen,

- Mittel zum Vergleichen der Summe mit dem vorgegebenen Fehlerschwellenwert ($E_{max}$) und

- Mittel zum Bestimmen der Abtastzeit vor jeder neuen Messung der physikalischen Größe, wobei die Abtastzeit in der Weise bestimmt wird, daß ein vorgegebener Fehlerschwellenwert ($E_{max}$) bei der Bestimmung des Wertes der physikalischen Größe, der der neuen Messung der physikalischen Größe entspricht, nicht überschritten wird.

9. Vorrichtung nach Anspruch 8, **dadurch gekennzeichnet, daß** sie erste Mittel (MEM1) zum Speichern aufeinanderfolgender Meßwerte der physikalischen Größe (G), der Abtastzeit und der entsprechenden maximalen theoretischen Fehler umfaßt.

10. Vorrichtung nach Anspruch 9, **dadurch gekennzeichnet, daß** die ersten Mittel zum Speichern ein Schieberegister (MEM1) umfassen.

11. Vorrichtung nach Anspruch 8, **dadurch gekennzeichnet, daß** sie zweite Mittel (MEM2) zum Speichern aufeinanderfolgender Werte des physikalischen Parameters umfaßt.

12. Vorrichtung nach Anspruch 9, **dadurch gekennzeichnet, daß** sie außerdem Mittel (32) zum Summieren der gespeicherten maximalen theoretischen Fehler, zum Vergleichen dieser Summe mit dem vorgegebenen Fehlerschwellenwert ($E_{max}$) und zum Bestimmen einer an das Ergebnis des Vergleichs angepaßten Abtastzeit umfaßt.

13. Vorrichtung nach den Ansprüchen 9 und 10, **dadurch gekennzeichnet, daß** sie Mittel (32) zum Bestimmen des Wertes des physikalischen Parameters, der den aufeinanderfolgenden Messungen der physikalischen Größe (G), den Abtastzeiten und den gespeicherten maximalen theoretischen Fehlern entspricht, und zum Vergleichen dieses Wertes mit einem vorgegebenen Wert des physikalischen Parameters sowie Mittel (30) zum Beseitigen der ersten Mittel (MEM1) zum Speichern des (der) gespeicherten ersten maximalen theoretischen Fehler(s), wenn der vorgegebene Wert des Parameters erreicht ist, umfaßt.

14. Anwendung des Verfahrens nach einem der Ansprüche 1 bis 7 und der Vorrichtung nach einem der Ansprüche 8 bis 13 auf die Fluidmessung.

FIG.1

FIG.2

FIG.3

FIG.4

FIG.5

FIG.6a

FIG.6b

| Q(1) | Q(2) | Q(3) | ⋯ | Q(k-2) | Q(k-1) | 0.0 | ⋯ |
|------|------|------|---|--------|--------|-----|---|
| T(1) | T(2) | T(3) | ⋯ | T(k-2) | T(k-1) | 0.0 | ⋯ |
| E(1) | E(2) | E(3) | ⋯ | E(k-2) | 0.0 | 0.0 | ⋯ |

| Q(1) | Q(2) | Q(3) | ⋯ | Q(k-1) | Q(k) | 0.0 | ⋯ |
|------|------|------|---|--------|------|-----|---|
| T(1) | T(2) | T(3) | ⋯ | T(k-1) | T(k) | 0.0 | ⋯ |
| E(1) | E(2) | E(3) | ⋯ | E(k-1) | 0.0 | 0.0 | ⋯ |

<u>a</u> Mesure de $Q_m$

<u>b</u> Calcul du volume
$V_m = V_m + NT_s Q_m$

<u>c</u> non — $|Q_m - Q(Ad)| \geqslant Q_s$? — oui — <u>d</u> Calcul du volume d'erreur
$E(Ad) = NT_s[Q_m - Q(Ad)]$

<u>e</u> $Ad = Ad + 1$

<u>g</u> $Q(Ad) = \dfrac{Q(Ad)T(Ad) + Q_m NT_s}{T(Ad) + NT_s}$

$T(Ad) = T(Ad) + NT_s$

<u>f</u> $Q(Ad) = 0$
$T(Ad) = 0$
$E(Ad) = 0$

non — <u>h</u> $\displaystyle\sum_{i=1}^{Ad} Q(i)T(i) \geqslant V_{max}$? — oui

<u>i</u> $Ad = Ad - 1$
et pour $i = 2$ à Ad
$Q(i-1) = Q(i)$
$T(i-1) = T(i)$
$E(i-1) = E(i)$

non — <u>j</u> $\displaystyle\sum_{i=1}^{Ad} E(i) \geqslant E_{max}$? — oui

<u>m</u> $N = \max\left[1, \left|\dfrac{E_{max} - \displaystyle\sum_{i=1}^{Ad} E(i)}{(|Q(Ad) - Qmax/2| + Qmax/2)T_s}\right|\right]$

<u>k</u> $N = 1$

<u>l</u> Attente de $NT_s$

# FIG.7

FIG.8